(19)

Europäisches
Patentamt
European
Patent Office
Office européen
des brevets

(11)  **EP 2 774 893 A1**

(12)  **EUROPEAN PATENT APPLICATION**
published in accordance with Art. 153(4) EPC

(43) Date of publication:
**10.09.2014  Bulletin 2014/37**

(21) Application number: **12845975.7**

(22) Date of filing: **24.10.2012**

(51) Int Cl.:
***C01B 21/064*** (2006.01)

(86) International application number:
**PCT/JP2012/077499**

(87) International publication number:
**WO 2013/065556 (10.05.2013 Gazette 2013/19)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority:  **02.11.2011  JP 2011240880**

(71) Applicant: **Kaneka Corporation
Osaka-shi, Osaka 530-8288 (JP)**

(72) Inventors:
• **MATSUMOTO, Kazuaki**
  **Settsu-shi**
  **Osaka 566-0072 (JP)**

• **KAWAGUCHI, Toshiyuki**
  **Settsu-shi**
  **Osaka 566-0072 (JP)**
• **SAKAGUCHI, Masashi**
  **Settsu-shi**
  **Osaka 566-0072 (JP)**

(74) Representative: **Vossius & Partner
Siebertstrasse 4
81675 München (DE)**

(54)  **PROCESS FOR CONTINUOUS PRODUCTION OF BORON NITRIDE POWDER**

(57)  The present invention provides a process for continuously producing crystalline hexagonal boron nitride powder having a large particle size and high crystalline at higher efficiency, lower cost and reduction of contamination inside the furnace. The present invention relates to a process for continuously producing crystalline hexagonal boron nitride powder comprising: the first step of heating a boron-containing material and a nitrogen-containing material to obtain crude boron nitride powder having boron nitride content of 80 % by weight or higher, and the second step of feeding the crude boron nitride powder and a boron-containing flux component in the content satisfying the following formula (1) with a heat-resistant container, and heating the container including the crude boron nitride powder and the boron-containing flux component at 1550 to 2400 °C in a continuous furnace under the atmosphere of nitrogen gas, to grow hexagonal boron nitride in the form of crystal.

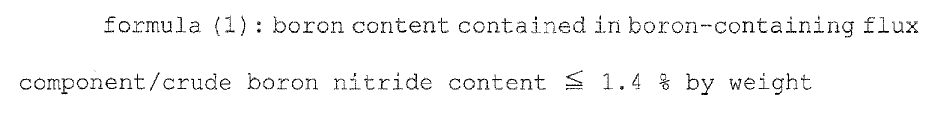

formula (1): boron content contained in boron-containing flux component/crude boron nitride content ≦ 1.4 % by weight

EP 2 774 893 A1

**Description**

TECHNICAL FIELD

The present invention relates to a process for continuously producing boron nitride powder. Specifically, the present invention relates to a process for continuously producing crystalline hexagonal boron nitride powder comprising the first step of heating a boron-containing material and a nitrogen-containing material to obtain crude boron nitride (BN) powder having boron nitride content of 80 % by weight or higher, and the second step of feeding the crude boron nitride powder and a boron-containing flux component including boron in a given amount with a heat-resistant container, and heating the container at 1550 to 2400 °C in a continuous furnace under the atmosphere of nitrogen gas, to grow hexagonal boron nitride in the form of crystal.

BACKGROUND ART

Hexagonal boron nitride powder (hereinafter referred to as h-BN powder) has excellent properties such as heat resistance, lubricity, electrical insulation, and thermal conductivity, and the powder has been used in many applications such as solid lubricants, mold lubricants, cosmetic raw materials, fillers for thermal conductive resins, and sintered raw materials. Among these, the powder is useful for cosmetic raw materials or fillers for thermal conductive resins due to excellent masking effect in the case where the powder is mixed in cosmetics, and high thermal conductivity.

Methods for industrially producing the h-BN powder include a method for reaction of a boron-containing material such as boric acid, boron oxide, and borax with a nitrogen-containing material such as melamine, urea, dicyanediamide, ammonia, and nitrogen under heated atmosphere and the like.

As to these methods, patent document 1 discloses that crystalline h-BN powder can be efficiently produced by heating a boron-containing material and a nitrogen-containing material at a temperature of about 900 to 1300 °C to synthesize crude BN powder, washing the crude BN powder with water to remove impurities, and heating the resulting powder at a high temperature of about 1500 to 1800 °C.

Patent document 2 discloses that crystalline h-BN powder can be produced by adding a Ca-containing material to a mixture including a boron-containing material such as boric acid and a nitrogen-containing material such as melamine, and baking the resulting mixture at a high temperature of 1800 to 2200 °C to crystallize the mixture. Similarly, patent document 3 discloses that the Ca-containing material such as calcium carbonate or calcium borate is suitable for production of crystalline h-BN powder. Further, patent document 6 discloses a method for curing the crude boron nitride powder under the conditions of a temperature of 60 °C or less and one week or more, and heating the resulting powder.

Patent document 4 discloses a method for continuously producing h-BN powder by reaction of a carbon compound as a reducing agent with a boron-containing material such as boric acid at a high temperature of 1650 to 2300 °C under the conditions of the atmosphere of nitrogen gas and the presence of a nitriding catalyst in order to reductively nitride the boron-containing material. In addition, patent document 5 discloses a high temperature continuous furnace suitable for reductive nitridation of h-BN powder.

PRIOR ART DOCUMENTS

PATENT DOCUMENT

Patent Document 1: Japanese Patent Laid-open Publication No. Sho 61-72604

Patent Document 2: Japanese Patent Laid-open Publication No. Hei 11-29307

Patent Document 3: Japanese Patent Laid-open Publication No. Hei 11-79720

Patent Document 4: Japanese Patent Laid-open Publication No. Sho 60-155507

Patent Document 5: Japanese Patent Laid-open Publication No. Sho 62-102080

Patent Document 6: Japanese Patent Laid-open Publication No. 2010-37123

SUMMARY OF THE INVENTION

PROBLEMS TO BE SOLVED BY THE INVENTION

As shown in the above, high-temperature treatment of about 2000 °C is necessary to produce crystalline h-BN powder. However, in methods by using batch furnaces as shown in patent documents 1 to 3 and 6, there were problems that operations of elevating a temperature up to about 2000 °C and lowering a temperature to a given temperature capable of taking off the powder are necessarily repeated every production, and large energy loss is also required in heating and cooling.

In addition, in methods of patent documents 2 and 3 in which the crude BN powder is treated at a high temperature of about 2000 °C without temporarily taking off the powder, a large amount of decomposed matter is caused from a nitrogen compound and a boron compound as a raw material during production of crystalline h-BN powder. Therefore, when these methods are applied to a method for continuously producing h-BN powder with the continuous furnace, the inside of the high-temperature furnace is contaminated at any one given point in time, and much times and labors are required for cleaning the inside of the furnace.

In methods of patent documents 4 and 5 in which h-BN powder can be continuously produced, a carbon compound used as a reducing agent reduces a boron compound at a high temperature and then the carbon compound is volatilized as CO or $CO_2$ gas. As a result, there were problems that the yield of the resulting h-BN powder is lowered relative to prepared raw material content, the rate of operation of a high temperature furnace with high cost and maintenance difficulties is decreased to increase the cost of equipment, and the cost of crystalline h-BN powder is also increased. In addition, there was a problem that it was unlikely to make the resulting h-BN powder large in crystal size.

Thus, in prior art, it was difficult to produce h-BN powder having a larger particle size and high crystalline at high efficacy, lower cost, and reduction of contamination inside the furnace. Therefore, the problem of the present invention is to provide a process for continuously producing crystalline hexagonal boron nitride powder having a large particle size and high crystalline at high efficacy, lower cost, and reduction of contamination inside the furnace.

SOLUTIONS TO THE PROBLEMS

The inventors of the present invention made various investigations for solving the above-mentioned problem that the h-BN powder having a large particle size and high crystalline is continuously produced at high efficacy, lower cost and reduction of contamination inside the furnace.

As a result, the inventors came up with an idea that crystalline hexagonal boron nitride powder can be continuously produced by heating a boron-containing material and a nitrogen-containing material to obtain crude boron nitride powder having boron nitride content of 80 % by weight or higher, and feeding the crude boron nitride powder and a boron-containing flux component including boron in a given amount with a heat-resistant container, and heating the container at 1550 to 2400 °C in a continuous furnace under the atmosphere of nitrogen gas, to grow hexagonal boron nitride in the form of crystal.

The first invention is a process for continuously producing crystalline hexagonal boron nitride powder comprising: the first step of heating a boron-containing material and a nitrogen-containing material to obtain crude boron nitride powder having boron nitride content of 80 % by weight or higher, and the second step of feeding the crude boron nitride powder and a boron-containing flux component in the content satisfying the following formula (1) with a heat-resistant container, and heating the container including the crude boron nitride powder and the boron-containing flux component at 1550 to 2400 °C in a continuous furnace under the atmosphere of nitrogen gas, to grow hexagonal boron nitride in the form of crystal.

formula (1): boron content contained in boron-containing flux component/crude boron nitride content ≦ 1.4 % by weight

The second invention is the process according to the first invention, wherein the heating temperature of the first step is 800 °C or higher and less than 1550 °C.

The third invention is the process according to the first or second invention, wherein the heat-resistant container is made of graphite or boron nitride.

The fourth invention is the process according to any one of first to third inventions, wherein the heat-resistant container is made of graphite and the inside surface of the container is at least coated with boron nitride.

The fifth invention is the process according to any one of first to fourth inventions, wherein the continuous furnace is a pusher tunnel furnace.

The sixth invention is the process according to any one of first to fifth inventions, wherein graphitization index (GI) of the crude boron nitride powder by X-ray diffraction process is 2.5 or higher and the number average particle size thereof is 9 $\mu$m or less, and GI of the crystalline hexagonal boron nitride powder after said heating treatment at 1550 to 2400 °C under the atmosphere of nitrogen gas by X-ray diffraction process is 1.9 or less and the number average particle size thereof is 10 $\mu$m or more.

The present invention includes an invention (invention A) without containing the feature of the above formula (1) in the first invention. The requirements of the second to sixth inventions are preferable embodiments of the invention A. The invention A similarly includes all the features of the first invention except the above formula (1).

EFFECTS OF THE INVENTION

As described above, when the crude boron nitride (BN) powder is produced by heat treatment of the first step, and the used amount of a boron-containing flux component is controlled at high temperature treatment of 1550 to 2400 °C of the second step, the inside wall of the furnace is hardly contaminated during continuous production due to no occurrence of decomposed matter and volatile matter during high temperature treatment, and the energy required for increase and decrease of the temperature of a high temperature furnace can be greatly decreased because the furnace can be continuously worked for extended period. In addition, as a result of no occurrence of decomposed matter and volatile matter, efficiency of utilization for the high temperature continuous furnace can be improved, and the cost of equipment also can be decreased. Thus, h-BN powder having a large particle size and high crystalline can be industrially produced at high efficiency and low cost in small-scale facility.

In particular, when the high temperature of 1550 to 2400 °C is carried out with the continuous furnace, high crystallization of h-BN powder can be certainly accomplished although the boron-containing flux component in a small amount volatiles to greatly decrease the remaining amount of the flux component.

BRIEF DESCRIPTION OF DRAWINGS

[FIG.1] Fig.1 is a diagram showing an example of longitudinal-sectional view of a pusher tunnel furnace used in the present invention.
[FIG.2] Fig.2 is a diagram showing an example of a heat-resistant container used in a pusher tunnel furnace of the present invention.

MODES FOR CARRYING OUT THE INVENTION

A process of the present invention is characterized by including the first step of heating a boron-containing material and a nitrogen-containing material to obtain crude boron nitride powder, and the second step of heating the crude boron nitride powder and the boron-containing flux component containing boron in a given amount in a continuous furnace under the atmosphere of inert gas, to grow hexagonal boron nitride in the form of crystal. In the first step, the crude boron nitride is prepared to grow hexagonal boron nitride in the form of crystal. In the second step, the crude boron nitride and boron in a decreased amount are reacted to further grow hexagonal boron nitride in the form of crystal.

1. First Step

As the boron-containing material used in the present invention, various compounds such as boric acid, boron oxide, borate containing inorganic or organic compound, boron halide, borazine, and borosiloxane can be used. From the view of economic efficiency, reactivity and the like, a boron compound such as boric acid, boron oxide, borate containing alkaline metal or alkaline earth metal (for example, borax) can be used suitably. Boric acid and boron oxide preferably include one or more compounds represented by general formula $(B_2O_3)(H_2O)_x$ (x = 0 to 3) such as orthoboric acid ($H_3BO_3$), metaboric acid ($HBO_2$), tetraboric acid ($H_2B_4O_7$), and boric anhydride ($B_2O_3$).

The nitrogen-containing material used in the present invention may be a material including a nitrogen atom in a molecular, and an organic nitrogen compound, an inorganic nitrogen compound, nitrogen alone, a mixture thereof and the like can be used.

Various materials can be used as the organic nitrogen compound of the nitrogen-containing material. From the view of the content of nitrogen, economic efficiency, reactivity and the like, organic compounds having $NH_2$ group such as melamine and urea; organic ammonium salts; amide compounds; organic compounds having N≡C-group and the like are suitably used. Among these, melamine and urea are especially preferably used. The inorganic nitrogen compound of the nitrogen-containing material can include ammonia gas, an ammonium salt containing alkaline metal or alkaline earth metal, and the like. Nitrogen alone can include nitrogen gas, liquid nitrogen, and the like.

In the first step in which the boron-containing material and the nitrogen-containing material are reacted at an appropriate temperature to obtain the crude BN powder, the boron-containing material and the nitrogen-containing material may be reacted previously, or the boron-containing material and the nitrogen-containing material without reacting may be fed to a furnace to heat these, as long as BN meets a given amount as set forth below. When the nitrogen-containing material is gas such as ammonia gas or nitrogen gas, the boron-containing material alone may be fed to the furnace and the atmosphere inside the furnace may be replaced with the above gas to heat as it is. Alternatively, when the boron-containing material and the nitrogen-containing material are fed to the furnace and the atmosphere inside the furnace is replaced with gas such as ammonia gas or nitrogen gas, nitrogen can be efficiently introduced in the system. However, the atmosphere is not limited to these, and the atmosphere of the general inert gas can be used. Further, water or oxygen may be mixed in a small amount. In the first step, the above components may be mixed by using conventionally known methods, and for example, the above components may be mixed by using a high speed stirring apparatus such as a henschel mixer.

The maximum temperature of the furnace in the first step is not limited especially, and, for example, is less than 1550 °C, preferably less than 1500 °C, more preferably less than 1460 °C, further preferably less than 1400 °C, most preferably less than 1350 °C, preferably 800 °C or higher, more preferably 850 °C or higher, and further preferably 900 °C or higher from the view of the cost of instrument such as the furnace and the cost of utility required for heat treatment. When the maximum temperature of the furnace becomes higher too much, a special heat-resistant material and an expensive heat insulating material are required for the furnace of the first step to give the cost up of the instrument, and cost of utility required for heat treatment becomes expensive, as a result, the cost of the obtained h-BN powder is increased. In addition, in the case of heat treatment at 1550 °C or more, since the crystallization of BN powder is progressed at the unfinished situations, the crystallization may hardly be liable to progressed in the case where the BN powder is taken off and heated again. The speed of increasing a temperature, the speed of decreasing a temperature and the treated time of the maximum temperature and the like are not limited especially.

The crude BN powder obtained in the first step requires BN content of 80 % by weight or higher. When the BN content is less than 80 % by weight, much volatile matter and imparities occur during continuous heat treatment of 1550 to 2400 °C in the second step, so that the inside of the continuous furnace is contaminated and the yield of the crystalline h-BN powder is decreased in the continuous furnace. The BN content of the crude BN powder obtained in the first step is preferably 85 % by weight or higher, and more preferably 90 % by weight or higher.

The crude BN powder obtained in the first step may be took off under the atmosphere after cooling to cure at conditions of one or more weeks and the temperature of 60 °C or less, or may be fed to the high temperature continuous furnace in the second step without cooling just as it is. When curing, the high crystallization of h-BN powder can be promoted.

2. Second Step

The obtained crude BN powder can be subjected to heat treatment of 1550 to 2400 °C under the atmosphere of nitrogen gas to grow hexagonal boron nitride in the form of crystal, so that h-BN powder having a large particle size and high crystalline can be produced. The present invention has the feature that the used amount of the boron-containing flux component is controlled in the present second step as described below. However, when the amount of the boron-containing flux component is controlled, the crystallization of boron nitride does not reach to the maximum level in some cases even if the crystallization of the boron nitride is excellent level due to volatilization of the flux component during heat treatment. In order to accomplish the crystallization of the boron nitride at the maximum level, it is desirable that the heat treatment of 1500 to 2400 °C is carried out with the continuous furnace. Although the maximum temperature of heat treatment is the range of 1550 to 2400 °C, it is preferable that the maximum temperature of heat treatment is higher so as to obtain highly crystalline h-BN powder, and it is preferable that the maximum temperature of heat treatment is lower so as to decrease the cost of furnace management and maintenance. From the view of balance between high crystalline and low cost, the maximum temperature of heat treatment is preferably 1600 to 2300 °C, more preferably 1700 to 2250 °C, further preferably 1750 to 2200 °C, and most preferably 1800 to 2150 °C. It is preferable that the processing time of the maximum temperature is longer so as to obtain highly crystalline h-BN powder, and it is preferable that the processing time of the maximum temperature is shorter so as to decrease productivity or utility cost. The processing time of the maximum temperature is preferably 10 minutes to 10 hours, more preferably 20 minutes to 6 hours, and most preferably 30 minutes to 5 hours. It is necessary that the heat treatment is carried out under the atmosphere of nitrogen gas.

Graphitization Index (GI) by powder X-ray diffraction process is used for evaluation of crystalline of h-BN powder. GI can be determined by calculating integrated intensity ratio of lines (100), (101), and (102) from X-ray diffraction pattern, that is, area ratio thereof with the following formula. Smaller the value of GI, higher the crystalline of h-BN.

$$GI = [area\ \{(100) + (101)\}]/[area\ (102)]$$

As described above, GI is an index of crystalline of h-BN powder. As the crystalline of h-BN is higher, the value of GI becomes smaller. In the case where h-BN is completely crystallized (graphitized), it is supposed that GI is 1.60. However, in case of h-BN powder having high crystalline and a full-grown particle, the value of GI becomes much smaller due to easy of orientation of h-BN powder.

In the present invention, the crude BN powder obtained in the first step has preferably GI of 2.5 or higher, and the crystalline h-BN powder grown in form of the crystal in the second step has preferably GI of 1.9 or less. When GI cf the crude BN powder obtained in the first step is less than 2.5, the crystal growth is hardly promoted in the second step in some cases. GI of the crude h-BN in the first step is more preferably 2.6 or higher, further preferably 2.8 or higher, and most preferably 3.0 or higher. When GI of the crystalline h-BN powder in the second step is beyond 1.9, the crystallization is insufficient for use as a final product in many cases. GI of the crystalline h-BN powder in the second step is more preferably 1.8 or less, further preferably 1.6 or less, and most preferably 1.4 or less.

The number average particle size of h-BN powder is obtained by supplying h-BN powder with an aqueous solution containing a surfactant such that h-BN powder is not aggregated, dispersing the resulting mixture with an ultrasonic disperser for one minute, and determining with a laser diffraction particle size analyzer.

In the present invention, the crude BN powder obtained in the first step preferably has the number average particle size of 9 $\mu$m or less, and the crystalline h-BN powder after crystal growth in the second step preferably has the number average particle size of 10 $\mu$m or more. When the crude BN powder obtained in the first step has the number average particle size of more than 9 $\mu$m, the crystal growth is hardly promoted in some cases. The crude h-BN in the first step has the number average particle size of more preferably 8 $\mu$m or less, further preferably 7 $\mu$m or less, and most preferably 6 $\mu$m or less. When the crystalline h-BN powder in the second step has the number average particle size of less than 10 $\mu$m, the crystallization is insufficient for use as a final product in many cases. The crystalline h-BN powder in the second step has the number average particle size of preferably 12 $\mu$m or more, more preferably 14 $\mu$m or more, further preferably 16 $\mu$m or more, and most preferably 18 $\mu$m or more.

In the present invention, it is necessary that the boron-containing flux component is added tc the crude boron nitride powder in heat treatment and crystal growth at 1550 to 2400 °C in the second step. Although the boron-containing flux component is positively added to the crude boron nitride powder in the second step, it is possible that free boron component can be used as the boron-containing flux component in the second step, by controlling the reactivity in the first step, or appropriately remaining the free boron component in the crude BN powder produced in the first step. When the content of the free boron component is small in the crude BN powder produced by reaction at a temperature of less than 1550 °C, it is necessary to add the additional boron-containing flux component in the second step. In the second step, the above components may be mixed by using conventionally known methods, and for example, the above components may be mixed by using a high speed stirring apparatus such as a henschel mixer.

As the boron-containing flux component, a boron compound except the boron nitride is used. Specifically, various compounds such as boric acid, boron oxide, borate containing inorganic compound or organic compound, boron halide, borazine, and borosiloxane can be used. From the view of economic efficiency, reactivity and the like, the boron compound such as borate containing alkaline metal or alkaline earth metal, boric acid, and boron oxide can be used suitably. The borate containing alkaline metal or alkaline earth metal includes a borate containing alkaline metal such as borax, and a borate containing alkaline earth metal such as calcium borate, and magnesium borate. Among these, boric acid, borate oxide, and calcium borate are especially preferable.

The boron-containing flux component such as the borate containing alkaline metal or alkaline earth metal is preferably used, and there is no need to add the borate as a raw material. That is, as long as an alkaline metal-containing material or alkaline earth metal-containing material and the boron-containing material are contained, the borate containing alkaline metal or alkaline earth metal is produced within the system by reaction of these at high temperature, to promote crystallization of h-BN powder. Further, it is possible that purity of obtained h-BN powder is improved by selecting a material not remaining a component except alkaline metal or alkaline earth metal, or a volatile material.

Among the alkaline metal-containing material or alkaline earth metal-containing material, alkaline metal such as lithium, sodium, and potassium, and alkaline earth metal such as beryllium, magnesium, calcium, strontium, and barium are used suitably. The organic metal compound such as carbonate, oxide, peroxide, hydroxide, halide, metal, nitrate, nitrite, sulfate, sulfite, phosphate, silicate, borate, acetylacetonate are used suitably. The alkaline metal-containing material or alkaline earth metal-containing material is not necessarily high purity at all, and those having quality of commercially and industrially available products can be used suitably. Boric acid and boron oxide preferably include one or more compounds represented by general formula $(B_2O_3)$ $(H_2O)_x$ (x = 0 to 3) such as orthoboric acid $(H_3BO_3)$, metaboric acid $(HBO_2)$, tetraboric acid $(H_2B_4O_7)$, and boric anhydride $(B_2O_3)$. A molar ratio between alkaline metal or alkaline earth metal (M) element and boron (B) element can be set appropriately. For example, M/B = about 1/4 to 4/1, and preferably M/B = about 1/3 to 3/1 may be used.

In the case of heat treatment and crystal growth at 155C to 2400 °C in the second step, it is preferable that the boron-containing flux component is added in the amount of 50 parts by weight or less relative to 100 parts by weight of the crude BN powder. When the additive amount of the flux component is beyond 50 parts by weight relative to 100 parts by weight of the crude BN powder, the amount of crystalline h-BN powder burned at once is decreased in the case of production with the same furnace and the inside of the furnace is contaminated by the volatilization of the flux component to lower product efficiency in some cases. In addition, the additive material in the obtained crystalline h-BN powder remains to lower purity of crystalline h-BN powder. The additive amount of the boron-containing flux component is preferably 40 parts by weight or less, more preferably 30 parts by weight or less, further preferably 20 parts by weight or less, especially preferably 15 parts by weight or less, and most preferably 11 parts by weight or less, relative to 100 parts by weight of the crude BN powder.

In the present invention, it is essential that boron contained in the boron-containing flux component meets the following formula (1). The value of left side member of formula (1) is preferably 1.3 % by weight or less, more preferably 1.2 % by weight or less, and further preferably 1.1 % by weight or less. The value of left side member of formula (1) is for example, 0.01 % by weight or more, preferably 0.05 % by weight or more, and more preferably 0.1 % by weight or more. When the value of left side member of formula (1) is large, the crystal growth cannot be promoted in some cases due to contamination of the furnace and clog of the pipe. When the value of left side member of formula (1) is small, the crystal growth cannot be promoted in some cases due to small amount of boron required for crystal growth of h-BN powder.

```
formula (1): boron content contained in boron-containing flux component/crude boron nitride content ≦ 1.4 % by weight
```

The boron-containing flux component added in the second step may remain in the h-BN powder brought out from the continuous furnace of the second step, according to the added amount or kinds of the flux component. In such a case, it is preferable to wash the flux component by rinsing h-BN powder taken off with acid aqueous solution and the like. The acid aqueous solution includes general inorganic and strong acid solution such as hydrochloric acid, nitric acid, and sulfuric acid.

In the present invention, the continuous furnace is used when the heat treatment is carried out at 1550 to 2400 °C in the second step. The continuous furnace refers to a furnace for continuously carrying out heat treatment of samples by using a method for passing samples to be treated within the furnace preliminarily kept at the temperature to be heat-treated, not a method for heating samples with the operations for increasing and decreasing the temperature in the furnace such as the general batch type furnace. By using this continuous furnace, energy cost required for heat treatment can be greatly decreased due to unnecessary of the operations for increasing and decreasing the temperature up to 2000 °C in the furnace. In the case where the successive treatment is carried out with the continuous furnace, raw materials consecutively receive thermal history even before and after raw materials pass for the zone of high temperature. Therefore, when the treatment time in the zone of high temperature is the same as that of the batch type furnace, BN powder can has a large particle size and high crystalline to obtain high quality of h-BN powder as compared with batch type furnace.

As the continuous furnace, a furnace in general use can be widely applied. As used herein, the term "continuous" may refer to a way for mobilizing samples at a constant distance every definite period of time, and does not refer to a way for mobilizing samples at any one given point in time. In generally, the following way can be applied. The crude BN powder obtained in the first step and the boron-containing flux component are fed to the heat-resistant containers, the containers including the raw materials such as the crude BN powder and the boron-containing flux component are transferred every a few minutes to a few hours, and the containers including samples pass through the area of a high temperature kept at 1550 to 2400 °C in the continuous furnace every definite period of time.

The heat-resistant container used in heat treatment of 1550 to 2400 °C in the second step is preferably made of graphite or boron nitride. When a container except these is used, the crude BN powder and the boron-containing flux component are reacted at a high temperature in some cases, and the cost of the container may get high. When the container made of graphite or boron nitride is used in a pusher furnace as the continuous furnace, frictional forces between the container and the furnace wall can be decreased, and duration of life of the continuous furnace can be lengthened. When the container made of graphite is used in the pusher furnace, it is preferable that the outside surface or the inside surface of the container is at least coated with boron nitride in order to decrease reactivity between the crude BN powder or the boron-containing flux component and the container.

The continuous furnace used in the second step is preferably a pusher tunnel furnace. The crude BN powder obtained in the first step and a boron-containing flux component are fed to each of the heat-resistant containers, the containers including the mixture are continuously supplied to the pusher tunnel furnace maintained at 1550 to 2400 °C, and the containers including the mixture only successively pass through within the space maintained at 1550 to 2400 °C without increasing and decreasing the temperature of the pusher tunnel furnace, so that crystalline h-BN powder can be continuously produced.

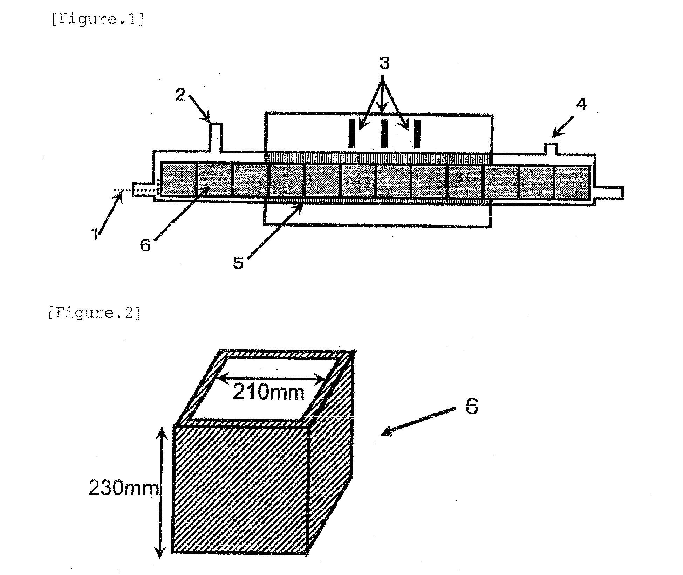

The pusher tunnel furnace capable of heating up to 1550 to 2400 °C can include a furnace equipped with a tunnel made of heat-resistant materials such as graphite or boron nitride and equipped with a heater made of graphite (for example, figure 1). A pusher is set around the entrance of the tunnel furnace, the heat-resistant containers filled with the raw materials are pushed ahead with the pusher at intervals, the containers including the raw materials are sent to the area of a high temperature in series to promote the crystallization of h-BN in the area of a high temperature. In this case, it is preferable that air current of nitrogen is flowed in the pusher tunnel furnace in order to discharge outside the furnace the small amount of volatile matter produced from the raw materials. In the case of treatment with air current cf nitrogen, defects inside BN crystal are restored to develop the crystallization of h-BN. In addition, when the tunnel is constituted with the heat-resistant material such as graphite or boron nitride, the furnace can be continuously driven for a long period without contamination of heater with the volatile matter even if the small amount of volatile matter is produced from the raw materials.

The obtained h-BN powder of the present invention having a large particle size and high crystalline is excellent in masking effect by other components mixed in cosmetics, and for example, the h-BN powder can be preferably used in cosmetics. Since high crystalline is resulted in high thermal conductivity and heat thermal resistance in contact between particles having a large particle size is reduced, for example, the h-BN powder is especially useful for the thermal conductive filler for resins. In the case of use as the thermal conductive filler, resins such as thermosetting resins or thermoplastic resins can be used effectively. The thermosetting resins including epoxy resins such as glycidyl ether epoxy resins, glycidyl ester epoxy resins, glycidyl amine epoxy resins; urethane resins; silicone thermosetting resins; acrylic thermosetting resins can be preferably used. The thermoplastic resins include aromatic vinyl resins such as polystyrene; vinyl cyanide resins such as polyacrylonitrile; chlorine resins such as polyvinyl chloride; polymethacryrate resins or polyacryrate resins such as polymethylmethacryrate; polyolefin resins such as polyethylene or polypropylene or cyclic polyolefin; polyvinyl ester resins such as polyvinyl acetate; polyvinylalcohol resins and derivatives thereof; polymethacrylate resins or polyacrylate resins or resins containing metal salt thereof; poly conjugated diene resins; polymers obtained by polymerizing maleic acid, fumaric acid and derivatives thereof; polymers obtained by polymerizing maleimide compounds; noncrystalline polyester resins such as noncrystalline semi aromatic polyester or noncrystalline full aromatic polyester; crystalline polyester resins such as crystalline semi aromatic polyester or crystalline full aromatic polyester; polyamide resins such as aliphatic polyamide or aliphatic-aromatic polyamide or full aromatic polyamide; polycarbonate resins; polyurethane resins; polysulfone resins; polyalkylene oxide resins; cellulose resins; polyphenylene ether resins; polyphenylene sulfide resins; polyketone resins; polyimide resins; polyamideimide resins; polyether imide resins; polyether ketone resins; polyether ether ketone resins; polyvinyl ether resins; phenoxy resins; fluorine resins; silicone resins; liquid crystal polymers; random or block or graft copolymers containing the above polymer and the like. These thermosetting resins can be used either singly or as a mixture of two or more thermosetting resins. When the mixture of two or more thermoplastic resins is used, a compatibilizer and the like can be used as needed. The thermoplastic resins may be appropriately chosen according to various purposes.

The present application claims the benefit of priority to Japanese Patent Application Number 2011-240880 filed on November 2, 2011. The entire contents of the specification of Japanese Patent Application Number 2011-240880 filed on November 2, 2011 are hereby incorporated by reference.

EXAMPLES

The present invention will be described more specifically below by way of Examples, but the present invention is not limited by Examples described below.

Graphitization index (GI) determination: the resulting boron nitride powder was subjected to wide angle x-ray diffraction determination with X-ray of Cu-Kα by using PANalyticalX'Pert Pro XRD instrument manufactured by Spectris Co. , Ltd. , and each of areas of (100) (101) (102) around about 2θ = 41°, 44°, and 50° was determined from the resulting measured values to calculate graphitization index (GI) on the basis of the following formula.

$$GI = [area\{(100)+(101)\}]/[area(102)]$$

Number average particle size : 1 ml of 20 % by weight of sodium hexametaphosphate solution was provided with 100 ml of a beaker, 20 mg of h-BN powder was invested to the resulting solution to disperse with an ultrasonic disperser for 3 minutes. The number average particle size was determined for the resulting dispersion with a laser diffraction particle size analyzer MT 3300 EX II manufactured by NIKKISO CO., LTD.

Example 1

55 kg of orthoboric acid and 45 kg of melamine were mixed with a henschel mixer, the mixture was heated at 1100 °C for 2 hours with a batch type tubular electric furnace under nitrogen flow, and cooled to obtain the crude BN powder. The resulting crude BN powder was taken off once, and the powder was left to stand for 10 days at conditions of 23 °C 50 % RH to cure the powder. Then, 18kg of the crude BN powder, 1.2 kg of calcium oxide, and 0.8 kg of orthoboric acid were mixed with a henschel mixer. 3kg of the mixture was filled in a heat-resistant container having a cube shape of 230 mm of external dimension and 210 mm of internal dimension in all of side and made of graphite and coated with boron nitride in both the inside and outside surfaces of the container. Then, 50 of the containers filled with the mixture were prepared. The central portion of the pusher tunnel furnace having a heater made of graphite and a muffle-type tunnel made of graphite was kept at 2050 °C and the inside of the furnace was filled with high-purity nitrogen. In the pusher tunnel furnace at this state, high purity nitrogen stream was further flowed therein, the heat-resistant containers filled with raw materials were sent into the furnace one by one container once every 30 minutes to pass through a zone of 2050 °C for 120 minutes, so that the crude BN powder was crystallized to obtain crystalline h-BN powder. After obtained crystalline h-BN powder was dispersed in an aqueous nitric acid solution to filter, wash with pure water and dry to obtain 2.66kg of crystalline h-BN powder per one heat-resistant container.
The character of obtained h-BN powder is as follows:

Crude BN powder: GI 4.74, Number average particle size 0.95$\mu$m.
Crystalline h-BN powder: GI 1.09, Number average particle size 23.5$\mu$m.

Example 2

65 parts by weight of boric anhydride and 35 parts by weight of calcium phosphate were mixed with a henschel mixer, the mixture was heated at 1000 °C for 6 hours with a batch type tubular electric furnace under ammonia flow, and cooled to obtain the crude BN powder. The resulting crude BN powder was taken off once, and the powder was left to stand for 10 days at conditions of 23 °C 50 % RH to cure the powder. Then, 18 kg of the crude BN powder and 2.0 kg of calcium borate were mixed with a henschel mixer. 3kg of the mixture was filled in a heat-resistant container having a cube shape of 230 mm of external dimension and 210 mm of internal dimension in all of side and made of graphite. Then, 50 of the containers filled with the mixture were prepared. The central portion of the pusher tunnel furnace having a heater made of graphite and a muffle-type tunnel made of graphite was kept at 2050 °C and the inside of the furnace was filled with high purity nitrogen. In the pusher tunnel furnace at this state, high purity nitrogen stream was further flowed therein, the heat-resistant containers filled with raw materials were sent into the furnace one by one container once every 30 minutes to pass through a zone of 2050 °C for 120 minutes, so that the crude BN powder was crystallized to obtain crystalline h-BN powder. After obtained crystalline h-BN powder was dispersed in an aqueous nitric acid solution to filter, wash with pure water and dry to obtain 2.66kg of crystalline h-BN powder per one heat-resistant container.
The character of obtained h-BN powder is as follows:

Crude BN powder: GI 3.58, Number average particle size 1.05$\mu$m.
Crystalline h-BN powder: GI 1.06, Number average particle size 26.5$\mu$m.

Comparative Example 1

55kg of orthoboric acid and 45kg of melamine were mixed with a henschel mixer, the mixture was heated at 1100 °C for 2 hours with a batch type tubular electric furnace under nitrogen flow, and cooled to obtain the crude BN powder. The resulting crude BN powder was taken off once, and the powder was left to stand for 10 days at conditions of 23 °C 50 % RH to cure the powder. Then, 90g of crude BN powder and 6g of calcium oxide and 4g of orthoboric acid were mixed in crucible. The mixture was filled in a heat-resistant container made of boron nitride to feed to the batch type electric furnace capable of heating at a high temperature. The inside of the furnace was substituted with nitrogen, and heated at 2050 °C for 2 hours, so that the crude BN powder was crystallized to obtain crystalline h-BN powder. After obtained crystalline h-BN powder was dispersed in an aqueous nitric acid solution to filter, wash with pure water and dry to obtain crystalline h-BN powder. Crude BN powder: GI 4.74, Number average particle size 0.95$\mu$m. Crystalline h-BN powder: GI 1.68, Number average particle size 12.3$\mu$m.
In Comparative Example 1, since a continuous production system with the continuous furnace was not adopted, the particle size of obtained crystalline h-BN powder was smaller than that of Example 1 and the crystalline was also lowered.

Comparative Example 2

55 kg of orthoboric acid and 45 kg of melamine were mixed with a henschel mixer, 3kg of the mixture was taken off per one heat-resistant container, and filled in the heat-resistant container having a cube shape of 230 mm of external dimension and 210 mm of internal dimension in all of side and made of graphite. Then, 50 of the containers filled with the mixture including the raw materials were prepared. The central portion of the pusher tunnel furnace having a heater made of graphite and a muffle-type tunnel made of graphite was kept at 2050 °C and the inside of the furnace was filled with high purity nitrogen. In the pusher tunnel furnace at this state, high purity nitrogen stream was further flowed therein, the heat-resistant containers filled with raw materials were sent into the furnace one by one container once every 30 minutes to pass through a zone of 2050 °C for 120 minutes, so that the crude BN powder was crystallized to synthesize crystalline h-BN powder. As a result, only 0.5 kg of h-BN powder was obtained per one heat-resistant container, productivity was decreased significantly. Further, since the muffle of furnace was highly contaminated by volatile matter or the like generated from the raw materials, the pusher of the continuous furnace becomes inoperable when sending 12 out 50 containers, and the furnace had stopped. After obtained crystalline h-BN powder was dispersed in an aqueous nitric acid solution to filter, wash with pure water and dry to obtain crystalline h-BN powder.
The character of obtained h-BN powder is as follows:

Crystalline h-BN powder : GI 1.55, Number average particle size 13.8μm.

In Comparative Example 2, since production with the continuous furnace was carried out without taking off the crude BN powder once, productivity of h-BN powder was decreased compared to Example 1, the contamination of the furnace was strong, the particle size of obtained crystalline h-BN powder was smaller and the crystalline was also lowered.

Comparative Example 3

50 kg of orthoboric acid, 11 kg of acetylene black and 5kg of calcium oxide were mixed with a henschel mixer, 3kg of the mixture was taken off per one heat-resistant container, and filled in the heat-resistant container having a cube shape of 230 mm of external dimension and 210 mm of internal dimension in all of side and made of graphite. Then, 50 of the containers filled with the mixture including the raw materials were prepared. The central portion of the pusher tunnel furnace having a heater made of graphite and a muffle-type tunnel made of graphite was kept at 2050 °C and the inside of the furnace was filled with high purity nitrogen. In the pusher tunnel furnace at this state, high purity nitrogen stream was further flowed therein, the heat-resistant containers filled with raw materials were sent into the furnace one by one container once every 30 minutes to pass through a zone of 2050 °C for 120 minutes, so that orthoboric acid was reduced with acetylene black and nitrized with nitrogen gas to synthesize crystalline h-BN powder. As a result, only 0.6 kg of h-BN powder was obtained per one heat-resistant container, productivity was decreased significantly. Further, contaminates like tar were generated from raw materials, and deposited around the downstream of the furnace to contaminate the furnace. After obtained crystalline h-BN powder was dispersed in an aqueous nitric acid solution to filter, wash with pure water and dry to obtain crystalline h-BN powder.
The character of obtained h-BN powder is as follows:

Crystalline h-BN powder: GI 1.41, Number average particle size 11.7μm.

In Comparative Example 3, since a method called reduction-nitridation method was adopted, continuous productivity was improved in comparison to Comparative Example 2. However, production efficiency of h-BN powder was significantly reduced in comparison to Example 1, the furnace was also contaminated, the particle size of obtained crystalline h-BN powder was smaller and the crystalline was also lowered.
Thus, crystalline h - BN powder produced by the method of the present invention has a large particle size and high crystalline, and the h-BN powder can be produced with small-scale facility at high efficacy. Such crystalline h-BN powder is useful for thermal conductive filler for resins.

[Reference Signs List]

1. Pusher
2. Gas exhaust
3. Carbon heater
4. Gas introduction

5. Tunnel type muffle
6. Heat resistant container

**Claims**

1. A process for continuously producing crystalline hexagonal boron nitride powder comprising:

the first step of heating a boron-containing material and a nitrogen-containing material to obtain crude boron nitride powder having boron nitride content of 80 % by weight or higher, and
the second step of feeding the crude boron nitride powder and a boron-containing flux component in the content satisfying the following formula (1) with a heat-resistant container, and heating the container including the crude boron nitride powder and the boron-containing flux component at 1550 to 2400 °C in a continuous furnace under the atmosphere of nitrogen gas, to grow hexagonal boron nitride in the form of crystal.

$$\text{formula (1): boron content contained in boron-containing flux}$$

$$\text{component/crude boron nitride content} \leqq 1.4 \text{ \% by weight}$$

2. The process according to claim 1, wherein the heating temperature of the first step is 800 °C or higher and less than 1550 °C.

3. The process according to claim 1 or 2, wherein the heat-resistant container is made of graphite or boron nitride.

4. The process according to any one of claims 1 to 3, wherein the heat-resistant container is made of graphite and the inside surface of the container is at least coated with boron nitride.

5. The process according to any one of claims 1 to 4, wherein the continuous furnace is a pusher tunnel furnace.

6. The process according to any one of claims 1 to 5, wherein graphitization index (GI) of the crude boron nitride powder by X-ray diffraction process is 2. 5 or higher and the number average particle size thereof is 9 $\mu$m or less, and GI of the crystalline hexagonal boron nitride powder after said heating treatment at 1550 to 2400 °C under the atmosphere of nitrogen gas by X-ray diffraction process is 1.9 or less and the number average particle size thereof is 10 $\mu$m or more.

[Figure.1]

[Figure.2]

| | INTERNATIONAL SEARCH REPORT | International application No. |
|---|---|---|
| | | PCT/JP2012/077499 |

A.  CLASSIFICATION OF SUBJECT MATTER
*C01B21/064*(2006.01)i

According to International Patent Classification (IPC) or to both national classification and IPC

B.   FIELDS SEARCHED

Minimum documentation searched (classification system followed by classification symbols)
C01B21/064

Documentation searched other than minimum documentation to the extent that such documents are included in the fields searched
   Jitsuyo Shinan Koho      1922-1996   Jitsuyo Shinan Toroku Koho   1996-2013
   Kokai Jitsuyo Shinan Koho  1971-2013   Toroku Jitsuyo Shinan Koho   1994-2013

Electronic data base consulted during the international search (name of data base and, where practicable, search terms used)

C.   DOCUMENTS CONSIDERED TO BE RELEVANT

| Category* | Citation of document, with indication, where appropriate, of the relevant passages | Relevant to claim No. |
|---|---|---|
| A | JP 2009-149469 A  (Denki Kagaku Kogyo Kabushiki Kaisha), 09 July 2009 (09.07.2009), entire text (Family: none) | 1-6 |
| A | JP 01-278404 A  (Union Carbide Corp.), 08 November 1989 (08.11.1989), entire text & JP 05-053723 B2     & US 4749556 A & EP 0336997 A1     & EP 0336997 B1 | 1-6 |
| A | JP 61-286207 A  (Showa Denko Kabushiki Kaisha), 16 December 1986 (16.12.1986), entire text; all drawings (Family: none) | 1-6 |

| ☒ Further documents are listed in the continuation of Box C. | ☐ See patent family annex. |
|---|---|

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 21 January, 2013 (21.01.13) | 29 January, 2013 (29.01.13) |

| Name and mailing address of the ISA/ | Authorized officer |
|---|---|
| Japanese Patent Office | |
| Facsimile No. | Telephone No. |

Form PCT/ISA/210 (second sheet) (July 2009)

**INTERNATIONAL SEARCH REPORT**

International application No.

PCT/JP2012/077499

C (Continuation).   DOCUMENTS CONSIDERED TO BE RELEVANT

| Category* | Citation of document, with indication, where appropriate, of the relevant passages | Relevant to claim No. |
|---|---|---|
| A | JP 10-203807 A  (Osamu YAMAMOTO),<br>04 August 1998 (04.08.1998),<br>entire text; all drawings<br>& CN 1194960 A | 1-6 |
| A | JP 62-102080 A  (Shin-Etsu Chemical Co., Ltd.),<br>12 May 1987 (12.05.1987),<br>entire text; all drawings<br>(Family: none) | 1-6 |
| P,A | JP 2012-056818 A  (Denki Kagaku Kogyo Kabushiki Kaisha),<br>22 March 2012 (22.03.2012),<br>entire text<br>(Family: none) | 1-6 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP SHO6172604 B
- JP HEI1129307 B
- JP HEI1179720 B
- JP SHO60155507 B
- JP SHO62102080 B
- JP 2010037123 A
- JP 2011240880 A